# EUROPÄISCHE PATENTSCHRIFT

(11) **EP 1 398 203 B1**
(45) Veröffentlichungstag und Bekanntmachung des Hinweises auf die Patenterteilung: **04.05.2005**
(21) Anmeldenummer: 03018180.4
(22) Anmeldetag: 09.08.2003
(51) Int. Cl.: B60K 31/00

(54) **Kraftfahrzeug**
Vehicle
Véhicule

(30) Priorität: 13.09.2002 DE 10242557
(43) Veröffentlichungstag der Anmeldung: 17.03.2004
(73) Patentinhaber: AUDI AG, 85045 Ingolstadt (DE)
(72) Erfinder: Hilpoltsteiner, Christian, 85309 Pörnbach (DE); Mauter, Gerhard, 85092 Kösching (DE); Remlinger, Wolfram, 85049 Ingolstadt (DE); Grömmer, Bettina, 93051 Regensburg (DE)
(74) Vertreter: Thielmann, Frank

(56) Entgegenhaltungen:
- EP-A- 1 096 457
- EP-A- 1 334 863
- DE-A- 10 053 315
- DE-A- 19 615 249
- DE-A- 19 940 723
- DE-A- 19 951 213
- PATENT ABSTRACTS OF JAPAN vol. 1995, no. 06, 31. Juli 1995 (1995-07-31) & JP 07 085400 A (MITSUBISHI MOTORS CORP), 31. März 1995 (1995-03-31)

## Beschreibung

Die Erfindung betrifft ein Kraftfahrzeug umfassend eine Einrichtung zur Erfassung von Verkehrsschildern, zur Auswertung ihres Informationsgehalts sowie zur Regelung der Ist-Geschwindigkeit des Kraftfahrzeugs in Abhängigkeit eines erfassten, eine Soll-Geschwindigkeit angebenden Informationsgehalts gemäß dem Oberbegriff des Anspruchs 1.

Ein derartiges Kraftfahrzeug wird in der DE-A-100 53 315 beschrieben. Dort wird ein Verfahren zum Detektieren von entlang einer Fahrbahn angeordneten Verkehrszeichen vorgeschlagen, bei dem die Fahrbahnumgebung mit einer Kamera erfasst wird. Anschließend werden die Erfassungsdaten ausgewertet und mit Verkehrszeichen verglichen, wenn ein Verkehrszeichen aufgefunden wird, wird ein Signal erzeugt, um eine dem Verkehrszeichen zugeordnete Maßnahme auszuführen.

Es ist beabsichtigt, in Zukunft Kraftfahrzeuge mit einer Einrichtung zur Erfassung von Verkehrsschildern auszustatten die es ermöglicht, den Informationsgehalt der Verkehrsschilder zu erfassen und, insbesondere sofern es sich um geschwindigkeitsbegrenzende Verkehrsschilder handelt, die Fahrgeschwindigkeit gebotsgemäß zu regeln. Bekannt sind dabei sogenannte "ACC-Systeme" (ACC = adaptive cruise control). Die Aufnahme eines Verkehrszeichens erfolgt über eine einrichtungsseitig vorgesehene Kamera, der ein geeignetes Bildverarbeitungs- und Auswertemittel zugeordnet ist, das im Rahmen einer Bildanalyse den Informationsgehalt und damit eine gegebenenfalls gebotene Soll-Geschwindigkeit analysiert. Über eine geeignete Steuerungseinrichtung wird nun der Fahrbetrieb des Fahrzeugs so geregelt, dass gebotskonform gefahren wird. Es handelt sich bei derartigen Systemen um sogenannten Fahrerassistenzsysteme, die vermeiden helfen sollen, dass ein Verkehrszeichen, das eine Geschwindigkeitsbegrenzung regelt, vom Fahrer übersehen wird und er mit zu hoher Geschwindigkeit in der geschwindigkeitsbegrenzten Zone fährt.

Die bekannten Systeme sind insoweit "starr", das heißt sie regeln die Ist-Geschwindigkeit möglichst exakt auf die Soll-Geschwindigkeit. Häufig jedoch wünscht der Fahrer aufgrund seines persönlichen Fahrstils in einer gebotsmäßig beschränkten Geschwindigkeitszone um ein gewisses Maß schneller oder langsamer als die gebotene Soll-Geschwindigkeit zu fahren. Dies mag damit zusammenhängen, dass sich der Kraftfahrer dem sich in der Regel ohnehin etwas schneller als die gebotene Soll-Geschwindigkeit bewegenden Verkehrsfluss anpassen möchte, oder weil er eine Tachometermissweisung, nach welcher der Tachometer vor oder hinterher läuft, kompensieren möchte etc.

Der Erfindung liegt damit das Problem zugrunde ein Kraftfahrzeug anzugeben, das hier Abhilfe schafft.

Zur Lösung dieses Problems ist erfindungsgemäß ein Kraftfahrzeug mit den Merkmalen des Anspruchs 1 vorgesehen.

Erfindungsgemäß ist die Einrichtung nicht nur zum exakten Regeln der Ist-Geschwindigkeit auf die Soll-Geschwindigkeit ausgebildet, vielmehr erfolgt die Regelung unter Berücksichtigung einer zusätzlichen Geschwindigkeitsangabe, die quasi ein "Δv" vorgibt, also ein Geschwindigkeitsintervall, um welches die gebotene Soll-Geschwindigkeit überschritten oder unterschritten werden soll. Es wird also im Endeffekt etwas schneller oder langsamer gefahren, je nachdem ob eine erhöhende oder erniedrigende Geschwindigkeitsangabe zugeordnet wird. Diese Geschwindigkeitsangabe ist zweckmäßigerweise in einem geeigneten Datenspeicher des Steuergeräts abgelegt, wo sie ausgelesen wird, wenn eine Soll-Geschwindigkeit nach einer Verkehrsschildanalyse über die Einrichtung erfasst wird. Selbstverständlich wird eine Geschwindigkeitsregelung in diesem Sinn dann wieder aufgehoben, wenn ein die Soll-Geschwindigkeit wiederum aufhebendes Verkehrsschild detektiert wird.

Die Geschwindigkeitsangabe kann erfindungsgemäß eine definierte Geschwindigkeitsangabe sein, die die Geschwindigkeitserhöhung oder - erniedrigung angibt. Beispielsweise kann fest vorgegeben sein, dass die erfasste Sollgeschwindigkeit stets um 15 km/h überschritten oder unterschritten werden soll, vorzugsweise je nach Fahrerwunsch, der dies entweder werkseitig einstellen lassen kann oder der dies im Bedarfsfall auch wählen kann. Alternativ zur Angabe einer definierten Geschwindigkeitsüberschreitung besteht die Möglichkeit, eine die Erhöhung oder Erniedrigung der Soll-Geschwindigkeit prozentual in Abhängigkeit der Soll-Geschwindigkeit angebende Geschwindigkeitsangabe vorzusehen. Beispielsweise kann steuerungseinrichtungsseitig definiert werden, dass die erfasste Soll-Geschwindigkeit um 10 % überschritten werden soll. Auf diese Weise ist also eine flexible Geschwindigkeitsüberschreitung je nach gebotener Soll-Geschwindigkeit gegeben. Eine Geschwindigkeitsbegrenzung auf 80 km/h wird also um 8 km/h überschritten, eine Geschwindigkeitsbegrenzung auf 120 km/h um 12 km/h. Entsprechendes gilt natürlich auch betreffend eine mögliche Unterschreitung.

Werden definierte Geschwindigkeitsangaben zugeordnet, sind im Speicher also feste Geschwindigkeitsintervalle wie z.B. +/- 15 km/h Über- oder Unterschreitung abgelegt, so ist es möglich, entweder nur eine einzige solche Geschwindigkeitsangabe vorzusehen, die jeder erfassten Soll-Geschwindigkeit zugeordnet wird. Das heißt, eine Geschwindigkeitsbegrenzung auf 80 km/h wird um 15 km/h z.B. überschritten, gleichermaßen wird eine Geschwindigkeitsbegrenzung auf 120 km/h um 15 km/h überschritten. Alternativ dazu besteht die Möglichkeit, verschiedene definierte Geschwindigkeitsangaben in Form eines Angabensatzes vorzusehen, die jeweils unterschiedlichen Soll-Geschwindigkeiten zugeordnet werden. Beispielsweise kann ein solcher Angabensatz bei einer Soll-Geschwindigkeit von 80 km/h eine Überschreitung von 10 km/h vorgeben, während eine Soll-Geschwindigkeit von 120 km/h um 15 km/h überschritten wird.

Um dem Fahrer in diesem Fall eine Möglichkeit zu geben, in gewisser Weise flexibel hinsichtlich der Geschwindigkeitsüber- oder -unterschreitung zu sein ist es denkbar, mehrere definierte einzelne Geschwindigkeitsangaben oder Angabensätze vorzusehen, wobei eine zu berücksichtigende Geschwindigkeitsangabe oder ein Angabensatz fahrerseitig wählbar ist. Im steuerungsgeräteseitigen Speicher sind also mehrere vom Fahrer wählbare Geschwindigkeitsangaben oder Angabensätze abgelegt, so dass er bei Bedarf die von ihm persönlich gewünschte Angabe oder den gewünschten Datensatz wählen kann.

Entsprechendes ist auch bei einer prozentualen Geschwindigkeitsangabe möglich, auch hier kann der Fahrer erfindungsgemäß wählen, um wie viel Prozent ein Geschwindigkeitsgebot überschritten werden soll. Dies kann er beispielsweise mit jeder Fahrt neu wählen, auch ist es denkbar, die gewählte prozentuale Geschwindigkeitsangabe im Speicher abzulegen und auch bei erneuter Fahrt zu berücksichtigen etc. Insgesamt ist in beiden Alternativen eine fahrerseitige Wählbarkeit möglich, was zu einer hohen Flexibilität des Systems beziehungsweise Anpassbarkeit auf die persönlichen Bedürfnisse des Fahrers führt.

In der Regel wird ein Kraftfahrzeug von mehreren Personen gefahren, die individuelle Wünsche beziehungsweise individuelle Fahrstile haben. Um dem Rechnung zu tragen sieht eine zweckmäßige Erfindungsausgestaltung vor, dass eine Geschwindigkeitsangabe oder ein Angabensatz personenspezifisch im Speichermittel ablegbar ist, wobei die jeweils benötigte Geschwindigkeitsangabe oder der Angabensatz nach Erfassen der Person des Fahrers bei Bedarf berücksichtigt wird. Das heißt es sind personenindividuelle Geschwindigkeitsangaben oder Angabensätze gespeichert, so dass eine personenindividuelle Regelung der Geschwindigkeit möglich ist. Dabei kann die Person automatisch erfasst werden, wenn sie hinter dem Lenkrad Platz genommen hat, wozu ebenfalls ein geeignetes Kameramittel nebst Bildauswertung und dergleichen möglich ist. Auch ist eine Erfassung über einen Fingerabdruckscanner etc. denkbar. Ist dies erfolgt, so wird automatisch die eine oder die mehreren personenspezifischen Geschwindigkeitsangaben oder der eine oder die mehreren Angabensätze ausgewählt. Besteht eine weitere Wahlmöglichkeit der Gestalt, aus diversen Geschwindigkeitsangaben oder diversen Angabensätzen nochmals zu wählen und quasi eine Feinabstimmung hinsichtlich der Geschwindigkeitsregelung vorzunehmen, erfolgt dies lediglich innerhalb der personenspezifischen Daten. Natürlich besteht daneben die Möglichkeit, dass eine Person sich quasi manuell über eine Taste oder ein sonstiges Eingabemittel gegenüber der Steuerungseinrichtung identifiziert.

Mitunter wird die Überschreitung der gebotenen Soll-Geschwindigkeit um die Geschwindigkeitsangabe nicht gewünscht, beispielsweise im Bereich von Engstellen oder Baustellen, wo eine insbesondere zu hohe Geschwindigkeit zu gefährlichen Situationen führen kann. Zu diesem Zweck kann erfindungsgemäß vorgesehen sein, dass der Betrieb der Einrichtung fahrerseitig zwischen einem auf die Soll-Geschwindigkeit ohne Berücksichtigung einer Geschwindigkeitsangabe regelnden Betrieb und einem Betrieb unter Berücksichtigung der Geschwindigkeitsangabe variierbar ist. Es besteht hier also die Möglichkeit, das "Sollgeschwindigkeits-Variationssystem" zu- oder abzuschalten. Es versteht sich von selbst, dass dieses System natürlich nur dann generell zugeschalten werden kann, wenn auch die Verkehrszeichenerfassungseinrichtung im Betrieb ist.

Weiterhin kann vorgesehen sein, dass eine geltende und einrichtungsseitig zu berücksichtigende Geschwindigkeitsangabe und gegebenenfalls der Betriebsmodus der Einrichtung an einem Anzeigedisplay wiedergebbar ist, so dass der Fahrer ständig Informationen über den Arbeitsmodus und die Regelgrößen erhält.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze eines erfindungsgemäßen Kraftfahrzeugs, und
- Fig.2: ein Diagramm zur Darstellung des erfindungsgemäßen Regelablaufs.

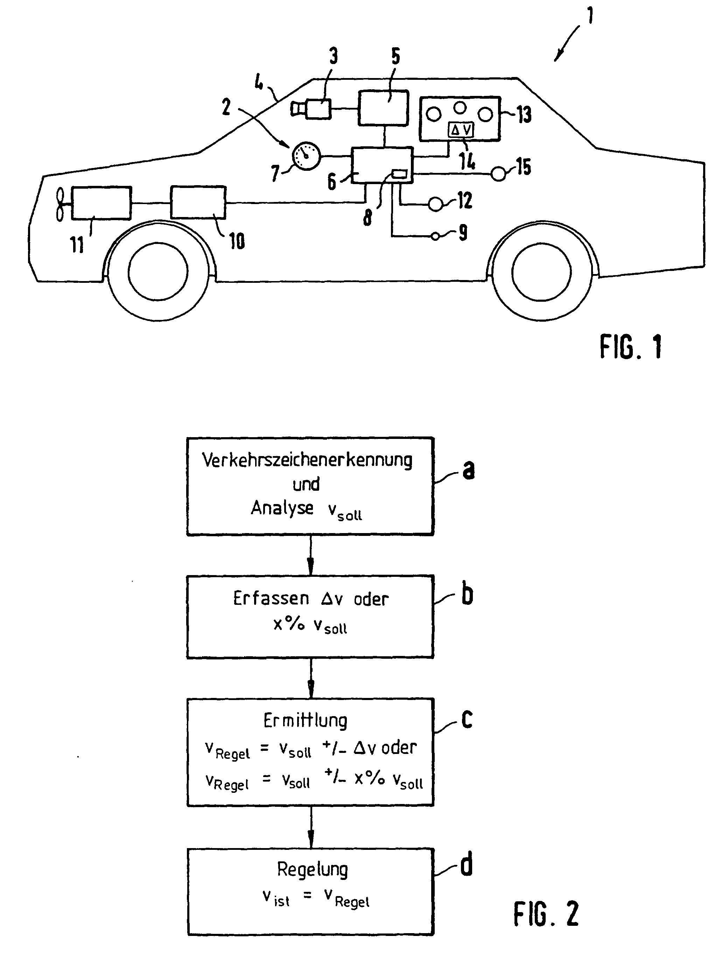

Fig. 1 zeigt ein erfindungsgemäßes Kraftfahrzeug 1 umfassend eine Einrichtung 2 zur Erfassung von Verkehrsschildern, zur Auswertung ihres Informationsgehalts sowie zur Regelung der Ist-Geschwindigkeit des Kraftfahrzeugs in Abhängigkeit einer erfassten, eine Soll-Geschwindigkeit angebenden Informationsgehalts. Diese Einrichtung 2 umfasst zunächst eine Kamera 3, die durch die Frontscheibe 4 des Kraftfahrzeugs 1 das Fahrzeugvorfeld aufnimmt. Der Kamera 3 nachgeschaltet ist ein Bildanalyseund Verarbeitungsmittel 5, dem die aufgenommenen Bilddaten gegeben werden und das diese nach Geschwindigkeit regelnden Verkehrsschilder analysiert. Dies geschieht über geeignete Analysealgorithmen. Dem Bildanalyse- und Verarbeitungsmittel 5 nachgeschaltet ist ein Steuergerät 6, das zur Ermittlung der tatsächlichen Regelgeschwindigkeit, auf welche also die Ist-Geschwindigkeit des Fahrzeugs zu regeln ist, dient. Dieses Steuergerät 6 kommuniziert im gezeigten Beispiel exemplarisch mit dem Tachometer 7, hierüber erhält es Informationen zur Ist-Geschwindigkeit des Kraftfahrzeugs 1. Das Steuergerät 6 weist ferner einen Speicher 8 auf, in dem eine oder mehrere Geschwindigkeitsangaben abgelegt sein können, die im Rahmen der Geschwindigkeitsregelung zu berücksichtigen sind. Ist die Einrichtung 2 insoweit betriebsbereit, als die Verkehrszeichenerkennung und auch die Geschwindigkeitsregelung aktiviert ist, wird nach Erkennen eines geschwindigkeitsgebietenden Verkehrszeichens die entsprechende Geschwindigkeitsinformation von dem Bildanalyse- und Verarbeitungsmittel 5 an das Steuergerät 6 gegeben, das anschließend die Ist-Geschwindigkeit über den Tachometer 7 einliest. Ist nun der Betriebsmodus der Geschwindigkeitsregelung unter Berücksichtigung einer zusätzlichen Geschwindigkeitsangabe aktiviert, was über den Ein-Aus-Schalter 9 erfolgen kann (der Fahrer kann also separat diesen speziellen Arbeitsmodus zu- oder abschalten), so liest das Steuergerät 6 aus dem Speicher 8 eine der erfassten Soll-Geschwindigkeit zugeordnete Geschwindigkeitsangabe aus. Diese Geschwindigkeitsangabe kann beispielsweise eine vorgegebene Geschwindigkeit sein die auf die Soll-Geschwindigkeit zu addieren ist, wenn eine Geschwindigkeitsüberschreitung um die Geschwindigkeitsangabe, im Allgemeinen hier "ΔV" genannt, gewünscht wird und die von ihr zu subtrahieren ist, wenn eine Geschwindigkeitsunterschreitung gewünscht wird. Dies ist entsprechend softwaremäßig im Steuergerät 6 definiert. Anhand der hierüber ermittelten Regelgeschwindigkeit v_{Regel} wird nun beispielsweise das Motorsteuergerät 10 veranlasst, den Motor 11 entsprechend zu regeln, dass die Regelgeschwindigkeit V_{Regel} mit der Ist-Geschwindigkeit erreicht wird.

Im Speicher 8 können unterschiedliche Geschwindigkeitsangaben abgelegt sein. Beispielsweise kann dort nur eine einzige fest vorgegebene Geschwindigkeit abgelegt sein, beispielsweise ein Wert von 15 km/h, der stets einer erfassten Soll-Geschwindigkeit hinzu addiert wird. Das heißt es wird generell eine Geschwindigkeitsüberschreitung von 15 km/h eingeregelt unabhängig davon, welche konkrete Soll-Geschwindigkeit nun über das Verkehrszeichen geboten ist. Daneben besteht die Möglichkeit, verschiedene, quasi gestaffelte Geschwindigkeitsangaben abzulegen, die unterschiedlichen Soll-Geschwindigkeiten zugeordnet sind. Einer Soll-Geschwindigkeit von 80 km/h wird beispielsweise ein Δv von 10 km/h zugeordnet, einer Soll-Geschwindigkeit von 100 km/h wird ein Δv von 15 km/h zugeordnet und einer Soll-Geschwindigkeit von 120 km/h wird beispielsweise ein Δv von 20 km/h zugeordnet. Das Steuergerät wählt nun abhängig von der gegebenen Soll-Geschwindigkeitsinformation die jeweils zutreffende Geschwindigkeitsangabe aus.

Daneben besteht natürlich die Möglichkeit, lediglich eine prozentuale Angabe abzuspeichern, die also angibt, um wie viel Prozent berechnet auf die Soll-Geschwindigkeit diese zu überschreiten ist. Dies ermöglicht quasi eine sollgeschwindigkeitsvariable Überschreitung oder Unterschreitung, je nachdem wie der Betriebsmodus ist.

Daneben besteht die Möglichkeit, dass bei Abspeicherung mehrerer unterschiedlicher Geschwindigkeitsangaben oder mehrerer unterschiedlicher Sätze an Geschwindigkeitsangaben der Kraftfahrer über einen geeigneten Auswahlschalter 12 diejenige Geschwindigkeitsangabe oder denjenigen Angabensatz wählen kann, der ihm persönlich am liebsten ist.

Beispielsweise kann der erste Geschwindigkeitsangabensatz nur relativ moderate soll-geschwindigkeitsbezogene Angaben beinhalten, während ein zweiter Angabensatz deutlich größere Geschwindigkeitsangaben zum Inhalt hat. Entsprechend kann zwischen unterschiedlichen Prozentangaben gewählt werden. Das heißt, es besteht hier insoweit eine Flexibilität, der Fahrer kann also aktiv wählen, wie das Regelverhalten sein soll.

Um ihm dies zu ermöglichen, ist eine im gezeigten Beispiel an der Instrumententafel 13 vorgesehene Anzeige 14 vorgesehen, in die im gezeigten Beispiel lediglich exemplarisch Δv" eingeschrieben ist. Dort werden dem Fahrer die entsprechenden Wahlmöglichkeiten angezeigt, die er über das Auswahlmittel 12 holen kann.

Schließlich ist noch ein Mittel 15 zur Erfassung der Person des Fahrers vorgesehen. Dies kann beispielsweise eine automatische Personenerfassung sein, die z.B. eine Kameraeinrichtung umfasst, über die der Fahrer, nachdem er sich hinter das Lenkrad gesetzt hat, aufgenommen wird, wobei seine Person über ein geeignetes Bildanalysemittel identifiziert wird. Auch besteht die Möglichkeit, z. B. den Fingerabdruck des Fahrers zu analysieren etc. Steht die Person des Fahrers fest, so kann, sofern personenspezifische Geschwindigkeitsangaben oder Angabensätze im Speicher 8 abgelegt sind, der oder die personenspezifischen Angaben ausgewählt werden, die entweder unmittelbar der Regelung zugrunde gelegt werden oder innerhalb welcher der Fahrer dann wählen kann. Daneben besteht natürlich auch die Möglichkeit, das Mittel 15 als manuelles Identifikationsmittel in Form eines Tastschalters oder dergleichen auszubilden, über das sich der Fahrer quasi aktiv identifizieren muss.

In jedem Fall erfolgt unter Zugrundelegung der über das Steuergerät 6 zu ermittelnden Geschwindigkeitsangabe - sei sie prozentual oder absolut - die Berechnung der Regelgeschwindigkeit v_{Regel}, bezogen auf welche nachfolgend wie beschrieben die Ist-Geschwindigkeit geregelt wird.

Fig. 2 zeigt ein schematisches Ablaufdiagramm, in dem die wichtigsten Schritte des erfindungsgemäßen Regelablaufs dargestellt sind. Zunächst erfolgt eine Verkehrszeichenerkennung und eine Analyse, ob eine Soll-Geschwindigkeit über ein erfasstes Verkehrszeichen geregelt wird (Schritt a). Falls dem so ist wird überprüft, ob eine Geschwindigkeitsregelung unter Berücksichtigung einer Geschwindigkeitsangabe Δv oder x%vₛₒₗₗ erforderlich ist, wie im Schritt b dargestellt ist. Ist dies der Fall, so folgt im Schritt c die Ermittlung der Regelgeschwindigkeit v_{Regel} = vₛₒₗₗ +/- Δv oder v_{Regel} = vₛₒₗₗ +/x%vₛₒₗₗ, je nachdem ob nun absolute Geschwindigkeitsangaben oder prozentuale Geschwindigkeitsangaben zu verarbeiten sind und ob eine Erhöhung (+) oder Erniedrigung (-) softwaremäßig im Steuergerät definiert ist.

Im Schritt d erfolgt nun die entsprechende Regelung der Ist-Geschwindigkeit vᵢₛₜ, die auf die Regelgeschwindigkeit v_{Regel} nachgeführt wird. Dies erfolgt über das Steuergerät 6 in Verbindung mit dem Steuergerät 10, kann aber auch allein über das Steuergerät 10 erfolgen, wenn dieses kontinuierlich die Ist-Geschwindigkeit erfasst, die Regelgeschwindigkeit v_{Regel} wurde ihm ohnehin zu Beginn des Regelablaufs vom Steuergerät 6 gegeben.

## Patentansprüche

1. Kraftfahrzeug (1) umfassend eine Einrichtung (2) zur Erfassung von Verkehrsschildern, zur Auswertung ihres Informationsgehalts sowie zur Regelung der Ist-Geschwindigkeit des Kraftfahrzeugs (1) in Abhängigkeit eines erfassten, eine Soll-Geschwindigkeit angebenden Informationsgehalts, welche Einrichtung (2) zum Regeln der Ist-Geschwindigkeit (vᵢₛₜ) unter Berücksichtigung einer der erfassten Soll-Geschwindigkeit (vₛₒₗₗ) zuzuordnenden und diese erhöhenden oder erniedrigenden Geschwindigkeitsangabe (Δv, %vₛₒₗₗ) ausgebildet ist, wobei die Geschwindigkeitsangabe eine definierte Geschwindigkeitsangabe (Δv), die die Geschwindigkeitserhöhung oder -erniedrigung angibt, oder eine die Erhöhung oder Erniedrigung der Soll-Geschwindigkeit prozentual in Abhängigkeit der Soll-Geschwindigkeit angebenden Geschwindigkeitsangabe (%vₛₒₗₗ) ist,
**dadurch gekennzeichnet,**
**dass** lediglich eine definierte Geschwindigkeitsangabe (Δv) vorgesehen ist, die jeder Soll-Geschwindigkeit (vₛₒₗₗ) zugeordnet wird, oder dass verschiedene definierte Geschwindigkeitsangaben (Δv) in Form eines Angabensatzes vorgesehen sind, die jeweils unterschiedlichen Soll-Geschwindigkeitsangaben (vₛₒₗₗ) zugeordnet werden.

2. Kraftfahrzeug nach Anspruch 1,
**dadurch gekennzeichnet,**
**dass** mehrere definierte einzelne Geschwindigkeitsangaben (Δv) oder Angabensätze vorgesehen sind, wobei eine zu berücksichtigende Geschwindigkeitsangabe (Δv) oder ein Angabensatz fahrerseitig wählbar ist.

3. Kraftfahrzeug nach Anspruch 1,
**dadurch gekennzeichnet,**
**dass** eine prozentuale Geschwindigkeitsangabe (%vₛₒₗₗ) fahrerseitig wählbar ist.

4. Kraftfahrzeug nach einem der vorangehenden Ansprüche,
**dadurch gekennzeichnet,**
**dass** eine Geschwindigkeitsangabe (Δv, %vₛₒₗₗ) oder ein Angabensatz personenspezifisch in einem Speichermittel (8) ablegbar ist, wobei die jeweils benötigte Geschwindigkeitsangabe oder der Angabensatz nach Erfassen der Person des Fahrers bei Bedarf berücksichtigt wird.

5. Kraftfahrzeug nach Anspruch 4,
**dadurch gekennzeichnet,**
**dass** die Person automatisch erfassbar ist, oder dass eine Personeninformation über ein einrichtungsseitiges Eingabemittel (15) eingebbar ist.

6. Kraftfahrzeug nach einem der vorangehenden Ansprüche
**dadurch gekennzeichnet,**
**dass** der Betrieb der Einrichtung (2) fahrerseitig zwischen einem auf die Soll-Geschwindigkeit (vₛₒₗₗ) ohne Berücksichtigung einer Geschwindigkeitsangabe (Δv, %vₛₒₗₗ) regelnden Betrieb und einem Betrieb unter Berücksichtigung der Geschwindigkeitsangabe (Δv, %vₛₒₗₗ) variierbar ist.

7. Kraftfahrzeug nach einem der vorangehenden Ansprüche,
**dadurch gekennzeichnet,**
**dass** eine geltende und einrichtungsseitig zu berücksichtigende Geschwindigkeitsangabe (Δv, %vₛₒₗₗ) und gegebenenfalls der Betriebsmodus der Einrichtung (2) an einem Anzeigedisplay (14) wiedergebbar ist.

## Claims

1. Motor vehicle (1), comprising a system (2) for detecting traffic signs, for evaluating their information content and for controlling the actual speed of the vehicle (1) in dependence on a detected information content that indicates a reference speed, which system (2) is configured for regulating the actual speed (vᵢₛₜ) while taking account of a speed indication (Δv, %vₛₒₗₗ) to be associated with the detected reference speed (vₛₒₗₗ) and increasing or reducing the latter, the speed indication being a defined speed indication (Δv) that indicates the increase or reduction in speed, or being a speed indication (%vₛₒₗₗ) that indicates the percentage increase or reduction of the reference speed in dependence on the reference speed, **characterised in that** only one defined speed indication (Δv) is provided which is associated with each reference speed (vₛₒₗₗ), or **in that** different defined speed indications (Δv) are provided in the form of an indication set, which different defined speed indications (Δv) are associated in each case with different reference speed indications (vₛₒₗₗ).

2. Motor vehicle according to claim 1, **characterised in that** a plurality of defined individual speed indications (Δv) or indication sets are provided, a speed indication (Δv) or an indication set to be taken into account being selectable by the driver.

3. Motor vehicle according to claim 1, **characterised in that** a percentage speed indication (%vₛₒₗₗ) is selectable by the driver.

4. Motor vehicle according to any one of the preceding claims, **characterised in that** a speed indication (Δv, %vₛₒₗₗ) or an indication set can be stored in a person-specific manner in a storage means (8), the speed indication or indication set required in the particular case being taken into account as needed after detection of the person of the driver.

5. Motor vehicle according to claim 4, **characterised in that** the person is detectable automatically, or that person information can be inputted via input means (15) forming part of the system.

6. Motor vehicle according to any one of the preceding claims, **characterised in that** operation of the system (2) is variable by the driver between a mode controlling to the reference speed (vₛₒₗₗ) without taking account of a speed indication (Δv, %vₛₒₗₗ), and a mode taking account of the speed indication (Δv, %vₛₒₗₗ).

7. Motor vehicle according to any one of the preceding claims, **characterised in that** a speed indication (Δv, %vₛₒₗₗ) currently in force and to be taken into account by the system, and optionally the operating mode of the system (2), can be represented on a display (14).

## Revendications

1. Véhicule automobile (1) comprenant un dispositif (2) pour détecter des panneaux de circulation, pour évaluer leur contenu informatif ainsi que pour réguler la vitesse réelle du véhicule automobile (1) en fonction d'un contenu informatif détecté, indiquant une vitesse de consigne, ledit dispositif (2) étant réalisé pour réguler la vitesse réelle (v_{réelle}) en prenant en considération une indication de vitesse (Δv, %v_{consigne}) à associer à la vitesse de consigne (v_{consigne}) détectée et augmentant ou diminuant celle-ci, l'indication de vitesse étant une indication de vitesse (Δv) définie, qui indique l'augmentation ou la diminution de vitesse, ou une indication de vitesse (%v_{consigne}) indiquant l'augmentation ou la diminution de la vitesse de consigne en pourcentage en fonction de la vitesse de consigne, **caractérisé en ce que** seule est prévue une indication de vitesse (Δv) définie associée à chaque vitesse de consigne (v_{consigne}), ou **en ce que** différentes indications de vitesse (Δv) définies sont prévues sous la forme d'un jeu d'indications, chaque fois associées à des indications de vitesse de consigne (v_{consigne}) différentes.

2. Véhicule automobile selon la revendication 1, **caractérisé en ce que** sont prévues plusieurs indications de vitesse (Δv) individuelles ou jeux d'indications spécifiques, une indication de vitesse (Δv) ou un jeu d'indications, à prendre en considération, pouvant être sélectionnée(s) par le conducteur.

3. Véhicule automobile selon la revendication 1, **caractérisé en ce qu'**une indication de vitesse (%v_{consigne}) exprimée en pourcentage peut être sélectionnée par le conducteur.

4. Véhicule automobile selon l'une des revendications précédentes, **caractérisé en ce qu'**une indication de vitesse (Δv, %v_{consigne}) ou un jeu d'indications peut être placé(e), de façon spécifique à une personne, dans des moyens de mémoire (8), l'indication de vitesse ou le jeu d'indications chaque fois nécessaire étant pris en compte en cas de besoin, après que la personne allant être le conducteur ait été détectée.

5. Véhicule automobile selon la revendication 4, **caractérisé en ce que** la personne peut être détectée automatiquement, ou bien une information personnelle peut être introduite par un moyen d'introduction (15) situé coté dispositif.

6. Véhicule automobile selon l'une des revendications précédentes, **caractérisé en ce que** le fonctionnement du dispositif (2) peut être modifié, côté conducteur, entre un fonctionnement, ayant comme effet de réguler la vitesse de consigne (v_{consigne}) sans prendre en considération l'indication de vitesse (Δv, %v_{consigne}) et un fonctionnement, prenant en considération l'indication de vitesse (Δv, %v_{consigne}).

7. Véhicule automobile selon l'une des revendications précédentes, **caractérisé en ce qu'**une indication de vitesse (Δv, %v_{consigne}), valide et à prendre en considération côté dispositif, et, le cas échéant le mode de fonctionnement du dispositif (2), peuvent être restitués sur un visuel d'affichage (14).
